# DEMANDE DE BREVET EUROPEEN

(11) **EP 0 678 330 A1**
(43) Date de publication de la demande: **25.10.1995**
(21) Numéro de dépôt: 95400657.3
(22) Date de dépôt: 24.03.1995
(51) Int. Cl.: B01F 17/00, A01N 25/30

(54) **Nouveau système émulsifiant pour la préparation de concentrés émulsionnables d'huiles végétales**

(30) Priorité: 20.04.1994 FR 9404715
(71) Demandeur: RHONE-POULENC CHIMIE, 92408 Courbevoie Cédex (FR)
(72) Inventeur: Bramati, Valerio, I-20020 Arese (IT); Gubelman, Isabelle, F-75016 Paris (FR); Marchetto, Antonio, I-21047 Saronno (IT); Prevotat, Marie-Luce, F-75015 Paris (FR)
(74) Mandataire: Seugnet, Jean Louis

(57) **Abrégé**

Système émulsifiant constitué
- d'au moins un agent tensio-actif (AT) choisi parmi les triglycérides en C₈-C₂₂ éthoxylés, les acides gras en C₈-C₂₂ éventuellement éthoxylés, et les alcools gras en C₈-C₂₂ éventuellement éthoxylés,
- et, d'un agent cotensio-actif (CT), constitué par un dialkylsulfosuccinate (DSS) de métal alcalin ou alcalino-terreux ou par un mélange de dialkylsulfosuccinate (DSS) et d'au moins un autre agent cotensio-actif (ACT) choisi parmi les hemisulfosuccinates, les sucroglycérides et les esters de sorbitan dérivés d'acides gras ; selon un rapport pondéral agent tensio-actif (AT) / agent cotensio-actif (CT) de l'ordre de 9080/10-20.

Concentré émulsionnable d'huiles végétales comprenant de l'ordre de 75 à 90% en poids d'une huile végétale (H) et de l'ordre de 25 à 10% en poids dudit système émulsifiant.

## Description

selon un rapport pondéral agent tensio-actif (AT) / agent cotensio-actif (CT) de l'ordre de 90-80 / 10-20.

Les triglycérides éthoxylés sont les dérivés d'éthoxylation d'huiles végétales ; ces huiles peuvent être préalablement hydrogénées avant éthoxylation pour éliminer les insaturations ; parmi les triglycérides éthoxylés on peut citer tout particulièrement l'huile de ricin éthoxylée contenant 10 motifs oxyéthylène éventuellement hydrogénée.

Parmi les acides gras éventuellement oxyéthylénés, on peut citer les acides oleïques contenant éventuellement de 2 à 4 motifs oxyéthylène, l'acide érucique ...

Parmi les alcools gras éventuellement oxyéthylénés, on peut citer l'alcool tridécylique contenant 10 motifs oxyéthylène, les alcools aliphatiques en C₁₂-C₁₄ contenant 3 motifs oxyéthylène...

Parmi les dialkylsulfosuccinates de métal alcalin ou alcalino-terreux, on peut citer tout particulièrement les bis(2-éthylhexyl )sulfosuccinates de Na, K, Ca, Mg ...

Selon une variante de l'invention, de l'ordre de 10 à 90%, de préférence de l'ordre de 50 à 90% du poids du dialkylsulfosuccinate (DSS) peut être remplacé par au moins un autre agent cotensio-actif (ACT) choisi parmi :
. les hemisulfosuccinates d'ammonium, de métal alcalin, de métal alcalino-terreux ou d'alkylammonium avec un radical alkyle en C₁-C₆, dérivant d'alcools aliphatiques en C₁-C₂₀, de préférence en C₈-C₁₀, contenant éventuellement de 1 à 10 motifs oxyéthylène, de préférence de 1 à 8 motifs oxyéthylène
. les sucroglycérides éventuellement éthoxylés contenant environ de 0 à 40 motifs oxyéthylène, de préférence de l'ordre de 2 à 30 motifs oxyéthylène
. les esters de sorbitan dérivés d'acides gras en C₈-C₂₂, de préférence en C₁₀-C₂₀, éventuellement éthoxylés contenant environ de 0 à 30 motifs oxyéthylène, de préférence de l'ordre de 2 à 20 motifs oxyéthylène.

Les hemisulfosuccinates tels que ci-dessus définis sont décrits dans la demande de brevet français FR-A-2 690 812 ; les hemisulfosuccinates de sodium dérivés d'alcools aliphatiques en C₈-C₁₀, contenant 2 motifs oxyéthylène sont particulièrement intéressants.

On entend par sucroglycérides les produits obtenus par transestérification des triglycérides de synthèse ou de préférence naturels par le saccharose.
Parmi les sucroglycérides, on peut citer notamment ceux provenant de l'huile de palme, du saindoux, de l'huile de coprah, du suif, de l'huile de colza ou de l'huile de ricin. Un mode opératoire de préparation des sucroglycérides est décrit dans la demande de brevet français FR-A-2 463 152.

Parmi les esters de sorbitan, on peut citer les monolaurate, monooléate, trioléate ... de sorbitan.

Le nouveau système émulsionnant ci-dessus décrit peut être mis en oeuvre pour la réalisation de concentrés émulsionnables d'huiles végétales, concentrés stables au stockage et aisément émulsionnables dans l'eau.

Un autre objet de l'invention consiste donc en des concentrés émulsionnables d'huiles végétales, caractérisés en ce qu'ils comprennent :
- de l'ordre de 75 à 90% en poids, de préférence de l'ordre de 80 à 87% en poids d'une huile végétale (H)
- et de l'ordre de 25 à 10% en poids, de préférence de l'ordre de 20 à 13% en poids d'un système émulsifiant constitué :
   - d'au moins un agent tensio-actif (AT) choisi parmi
      . les triglycérides en C₈-C₂₂, de préférence en C₁₂-C₁₈, éthoxylés contenant environ de 1 à 60 motifs oxyéthylène, de préférence de l'ordre de 2 à 60 motifs oxyéthylène,
      . les acides gras en C₈-C₂₂, de préférence en C₁₂-C₁₈, éventuellement éthoxylés contenant environ de 0 à 60 motifs oxyéthylène, de préférence de l'ordre de 2 à 60 motifs oxyéthylène,
      . et les alcools gras en C₈-C₂₂, de préférence en C₁₂-C₁₈, éventuellement éthoxylés contenant environ de 0 à 60 motifs oxyéthylène, de préférence de l'ordre de 2 à 60 motifs oxyéthylène,
   - et, d'un agent cotensio-actif (CT), constitué par un dialkylsulfosuccinate (DSS) de métal alcalin ou alcalino-terreux, dont le radical alkyle linéaire ou ramifié est en C₆-C₁₈, de préférence en C₈-C₁₂ ;

selon un rapport pondéral agent tensio-actif (AT) / agent cotensio-actif (CT) de l'ordre de 90-80 / 10-20.

Selon une variante de l'invention, de l'ordre de 10 à 90%, de préférence de l'ordre de 50 à 90% du poids du dialkylsulfosuccinate (DSS) peut être remplacé par au moins un autre agent cotensio-actif (ACT) choisi parmi :
- les hemisulfosuccinates d'ammonium, de métal alcalin, de métal alcalino-terreux ou d'alkylammonium avec un radical alkyle en C₁-C₆, dérivant d'alcools aliphatiques en C₁-C₂₀, de préférence en C₈-C₁₀, contenant éventuellement de 1 à 10 motifs oxyéthylène, de préférence de 1 à 8 motifs oxyéthylène
- les sucroglycérides éventuellement éthoxylés contenant environ de 0 à 40 motifs oxyéthylène, de préférence de l'ordre de 2 à 30 motifs oxyéthylène
- les esters de sorbitan dérivés d'acides gras en C₈-C₂₂, de préférence en C₁₀-C₂₀, éventuellement éthoxylés contenant environ de 0 à 30 motifs oxyéthylène, de préférence de l'ordre de 2 à 20 motifs oxyéthylène.

Comme exemple d'huile végétale (H), on peut citer les huiles de ricin, de colza, de soja, de palme, de maïs, de tournesol ...
Sont choisies d'une manière préférentielle les huiles végétales possédant des propriétés herbicides, des propriétés d'activateur biologique telles que l'huile de colza ou de soja et leurs esters méthyliques.

Différents exemples des agents tensio-actifs ou cotensio-actfs pouvant être présents dans lesdits concentrés émulsionnables ont déjà été mentionnés ci-dessus.

Lesdits concentrés émulsionnables faisant l'objet de l'invention, peuvent être obtenus par simple mise en solution sous agitation, des différents agents tensio-actifs ou cotensio-actifs dans l'huile végétale.

Les concentrés émulsionnables faisant l'objet de l'invention, peuvent être utilisés comme adjuvants par ajout à une formulation phytosanitaire au moment de l'utilisation de cette dernière, pour en améliorer l'efficacité (meilleure rétention de la formulation sur la surface des plantes, meilleure perméabilité cuticulaire ...). Ils peuvent également être mis en oeuvre comme base de formulation de matières actives solubles ou dispersables dans les huiles végétales.

Les exemples suivants sont donnés à titre indicatif.

### Exemple 1

### Préparation d'un concentré émulsionnable d'huile de colza

On prépare, par mise en solution sous agitation, de l'agent tensio-actif et de l'agent cotensio-actif dans de l'huile de colza, un concentré émulsionnable de composition suivante :
- huile de colza 80 parties en poids
- dioctylsulfosuccinate de calcium 3,5 parties en poids
- huile de ricin hydrogénée éthoxylée (contenant 10 motifs oxyéthylène) 16,5 parties en poids

### Caractéristiques du concentré émulsionnable

- Aspect : limpide.
- Stabilité au stockage : 15 jours à 54°C et 1 mois à 45°C.
- Test d'émulsification réalisé selon la norme CIPAC MT 36, décrite dans "CIPAC Handbook" Vol. 1 - Analysis of technical and formulated pesticides - R. de B. ASHWORTH, J. HENRIET, J-F. LOVETT et A. MARTIJN.

Le concentré émulsionnable est dilué en éprouvette à 30°C, à 5% dans de l'eau standard de dureté différente. L'éprouvette est retournée 10 fois.
Les taux de crémage ou de démixion de l'huile sont mesurés au bout de 1 heure, 2 heures et 24 heures au repos à 30°C.
Les taux de crémage mesurés sont les suivants

| **taux de crémage après** | **eau dureté 20 ppm** | **eau dureté 342 ppm** | **eau dureté 500 ppm** |
|---|---|---|---|
| 1 h | 0,5 ml | 0 ml | 0 ml |
| 2 h | 1 ml | 1 ml | 1 ml |
| 24 h | 3,5 ml | 2 ml | 2 ml |

### Exemple 2

### Préparation d'un concentré émulsionnable d'huile de soja

On prépare selon le mode opératoire de l'exemple 1, un concentré émulsionnable d'huile de soja de composition suivante :
- huile de soja 85 parties en poids
- dioctylsulfosuccinate de sodium 1,8 parties en poids
- acie oleique 3 parties en poids
- huile de ricin hydrogénée éthoxylée (contenant 10 motifs oxyéthylène) 10,2 parties en poids

### Caractéristiques du concentré émulsionnable

- Aspect : limpide
- Stabilité au stockage : 5 jours à 54°C et 1 mois à 45°C.
- Test d'émulsification (selon la méthode décrite ci-dessus)

Les taux de crémage mesurés sont les suivants

| **taux de crémage après** | **eau dureté 20 ppm** | **eau dureté 342 ppm** | **eau dureté 500 ppm** |
|---|---|---|---|
| 1 h | 2,0 ml | 1,5 ml | 1,0 ml |
| 2 h | 2,0 ml | 1,5 ml | 1,5 ml |
| 24 h | 2,0 ml | 1,5 ml | 1,5 ml |

### Exemple 3 (comparatif)

### Préparation d'un concentré émulsionnable d'huile de colza

On prépare comme ci-dessus un concentré émulsionnable de composition suivante :
- huile de colza 80 parties en poids
- huile de ricin éthoxylée (contenant 14 motifs oxyéthylène) 20 parties en poids

### Caractéristiques du concentré émulsionnable

- Aspect : biphasique (le tensio-actif démixe lentement)
- Instable au stockage même à température ambiante
- Test d'émulsification (selon la méthode décrite ci-dessus)

Les taux de crémage mesurés sont les suivants

| **taux de crémage après** | **eau durté 20 ppm** | **eau dureté 342 ppm** | **eau dureté 500 ppm** |
|---|---|---|---|
| 30 mm | 2 ml | 4 ml | 3 ml |
| 2h | 3 ml | 4 ml | 4 ml |
| 24h | démixion | démixion | démixion |

## Revendications

**1)** Système émulsifiant caractérisé en ce qu'il est constitué
- d'au moins un agent tensio-actif (AT) choisi parmi
. les triglycérides en C₈-C₂₂ éthoxylés contenant environ de 1 à 60 motifs oxyéthylène,
. les acides gras en C₈-C₂₂ éventuellement éthoxylés contenant environ de 0 à 60 motifs oxyéthylène,
. et les alcools gras en C₈-C₂₂ éventuellement éthoxylés contenant environ de 0 à 60 motifs oxyéthylène,
- et, d'un agent cotensio-actif (CT) constitué par un dialkylsulfosuccinate (DSS) de métal alcalin ou alcalino-terreux, dont le radical alkyle linéaire ou ramifié est en C₆-C₁₈ ou par un mélange de l'ordre de 10/90 à 90/10 en poids de dialkylsulfosuccinate (DSS) et d'au moins un autre agent cotensio-actif (ACT) choisi parmi :
. les hemisulfosuccinates d'ammonium, de métal alcalin, de métal alcalino-terreux ou d'alkylammonium avec un radical alkyle en C₁-C₆, dérivant d'alcools aliphatiques en C₁-C₂₀, contenant éventuellement de 1 à 10 motifs oxyéthylène,
. les sucroglycérides éventuellement éthoxylés contenant environ de 0 à 40 motifs oxyéthylène
. les esters de sorbitan dérivés d'acides gras en C₈-C₂₂ éventuellement éthoxylés contenant environ de 0 à 30 motifs oxyéthylène ;
selon un rapport pondéral agent tensio-actif (AT) / agent cotensio-actif (CT) de l'ordre de 90-80 / 10-20.

**2)** Système émulsifiant selon la revendication 1), caractérisé en ce qu'il est constitué
- d'au moins un agent tensio-actif (AT) choisi parmi
. les triglycérides en C₁₂-C₁₈ éthoxylés contenant de l'ordre de 2 à 60 motifs oxyéthylène,
. les acides gras en C₁₂-C₁₈ éthoxylés contenant de l'ordre de 2 à 60 motifs oxyéthylène,
. et les alcools gras en C₁₂-C₁₈ éthoxylés contenant de l'ordre de 2 à 60 motifs oxyéthylène,
- et, d'un agent cotensio-actif (CT), constitué par un dialkylsulfosuccinate (DSS) de métal alcalin ou alcalino-terreux, dont le radical alkyle linéaire ou ramifié est en C₈-C₁₂ ou par un mélange de l'ordre de 10/90 à 90/10 en poids de dialkylsulfosuccinate (DSS) et d'au moins un autre agent cotensio-actif (ACT) choisi parmi :
. les hemisulfosuccinates d'ammonium, de métal alcalin, de métal alcalino-terreux ou d'alkylammonium avec un radical alkyle en C₁-C₆, dérivant d'alcools aliphatiques en C₁-C₂₀, contenant éventuellement de 1 à 10 motifs oxyéthylène,
. les sucroglycérides éventuellement éthoxylés contenant environ de 0 à 40 motifs oxyéthyléne
. les esters de sorbitan dérivés d'acides gras en C₈-C₂₂ éventuellement éthoxylés contenant environ de 0 à 30 motifs oxyéthylène ;
selon un rapport pondéral agent tensio-actif (AT) / agent cotensio-actif (CT) de l'ordre de 90-80 / 10-20.

**3)** Système émulsifiant selon la revendication 1) ou 2), caractérisé en ce que l'agent cotensio-actif (CT) est constitué par un mélange de l'ordre de 10/90 à 50/50 en poids de dialkylsulfosuccinate (DSS) et d'au moins un autre agent cotensio-actif (ACT).

**4)** Utilisation du système émulsifiant faisant l'objet de l'une quelconque des revendications 1) à 3), pour la réalisation de concentrés émulsionnables d'huiles végétales.

**5)** Concentré émulsionnable d'huiles végétales, caractérisé en ce qu'il comprend :
- de l'ordre de 75 à 90% en poids d'une huile végétale (H)
- et de l'ordre de 25 à 10% en poids d'un système émulsifiant constitué :
- d'au moins un agent tensio-actif (AT) choisi parmi
. les triglycérides en C₈-C₂₂ éthoxylés contenant environ de 1 à 60 motifs oxyéthylène,
. les acides gras en C₈-C₂₂ éventuellement éthoxylés contenant environ de 0 à 60 motifs oxyéthylène,
. et les alcools gras en C₈-C₂₂ éventuellement éthoxylés contenant environ de 0 à 60 motifs oxyéthylène,
- et, d'un agent cotensio-actif (CT) constitué par un dialkylsulfosuccinate (DSS) de métal alcalin ou alcalino-terreux, dont le radical alkyle linéaire ou ramifié est en C₆-C₁₈ ou par un mélange de l'ordre de 10/90 à 90/10 en poids de dialkylsulfosuccinate (DSS) et d'au moins un autre agent cotensio-actif (ACT) choisi parmi :
. les hemisulfosuccinates d'ammonium, de métal alcalin, de métal alcalino-terreux ou d'alkylammonium avec un radical alkyle en C₁-C₆, dérivant d'alcools aliphatiques en C₁-C₂₀, contenant éventuellement de 1 à 10 motifs oxyéthylène,
. les sucroglycérides éventuellement éthoxylés contenant environ de 0 à 40 motifs oxyéthylène
. les esters de sorbitan dérivés d'acides gras en C₈-C₂₂ éventuellement éthoxylés contenant environ de 0 à 30 motifs oxyéthylène ;
selon un rapport pondéral agent tensio-actif (AT) / agent cotensio-actif (CT) de l'ordre de 90-80 / 10-20.

**6)** Concentré émulsionnable d'huiles végétales selon la revendication 5), caractérisé en ce qu'ils comprend :
- de l'ordre de 80 à 87% en poids d'une huile végétale (H)
- et de l'ordre de 20 à 13% en poids d'un système émulsifiant constitué :
- d'au moins un agent tensio-actif (AT) choisi parmi
. les triglycérides en C₁₂-C₁₈ éthoxylés contenant de l'ordre de 2 à 60 motifs oxyéthylène,
. les acides gras en C₁₂-C₁₈ éthoxylés contenant de l'ordre de 2 à 60 motifs oxyéthylène,
. et les alcools gras en C₁₂-C₁₈ éthoxylés contenant de l'ordre de 2 à 60 motifs oxyéthylène,
- et, d'un agent cotensio-actif (CT), constitué par un dialkylsulfosuccinate (DSS) de métal alcalin ou alcalino-terreux, dont le radical alkyle linéaire ou ramifié est en C₈-C₁₂ ou par un mélange de l'ordre de 10/90 à 90/10 en poids de dialkylsulfosuccinate (DSS) et d'au moins un autre agent cotensio-actif (ACT) choisi parmi :
. les hemisulfosuccinates d'ammonium, de métal alcalin, de métal alcalino-terreux ou d'alkylammonium avec un radical alkyle en C₁-C₆, dérivant d'alcools aliphatiques en C₁-C₂₀, contenant éventuellement de 1 à 10 motifs oxyéthylène,
. les sucroglycérides éventuellement éthoxylés contenant environ de 0 à 40 motifs oxyéthylène
. les esters de sorbitan dérivés d'acides gras en C₈-C₂₂ éventuellement éthoxylés contenant environ de 0 à 30 motifs oxyéthylène ;
selon un rapport pondéral agent tensio-actif (AT) / agent cotensio-actif (CT) de l'ordre de 90-80 / 10-20.

**7)** Concentré émulsionnable selon la revendication 5) ou 6), caractérisé en ce que l'agent cotensio-actif (CT) est constitué par un mélange de l'ordre de 10/90 à 50/50 en poids de dialkylsulfosuccinate (DSS) et d'au moins un autre agent cotensio-actif (ACT).
